# EUROPEAN PATENT SPECIFICATION

(11) **EP 2 685 049 B1**
(45) Date of publication and mention of the grant of the patent: **23.05.2018**
(21) Application number: 12757893.8
(22) Date of filing: 07.03.2012
(51) Int. Cl.: F01D 5/18

(54) **TURBINE BLADE**
TURBINENSCHAUFEL
AUBE DE TURBINE

(30) Priority: 11.03.2011 JP 2011054253
(43) Date of publication of application: 15.01.2014
(73) Proprietor: IHI Corporation, Tokyo 135-8710 (JP)
(72) Inventor: OKITA Yoji, Tokyo 135-8710 (JP); NAKAMATA Chiyuki, Tokyo 135-8710 (JP)
(74) Representative: Lamb, Martin John Carstairs
(86) International application number: PCT/JP2012/055876
(87) International publication number: WO 2012/124578

(56) References cited:
- EP-A2- 1 961 917
- JP-A- 3 141 801
- JP-A- 62 165 503
- JP-A- H03 141 801
- JP-A- 2002 221 005
- JP-A- 2002 221 005
- JP-A- 2003 056 301
- JP-A- 2005 299 636
- JP-A- 2008 520 890
- JP-A- 2010 043 568

## Description

### [Technical Field]

### [Technical Background]

Turbine blades that are provided in a turbine are generally exposed to high-temperature fluid. In particular, because the turbine blades provided in gas turbines are exposed to high-temperature combustion gas that has been discharged from a combustion chamber, they are exposed to an extremely high-temperature environment.

In order to increase the durability of turbine blades that are exposed to this type of high-temperature environment, in some cases a cooling gas such as cooling air is supplied to the interior of the turbine blades. By supplying cooling gas to the interior of the blades in this manner, it is possible to suppress any rise in the temperature of the turbine blades, and to thereby improve the durability of the turbine blades.

It is desirable for the thickness of an area around the trailing edge of a turbine blade to be as thin as possible from the standpoint of the aerodynamic performance of the turbine. For this reason, in many cases it is difficult to form a flow path in the area around the trailing edge of a turbine blade to enable the cooling gas to flow into the interior of the turbine blade. Namely, the area around the trailing edge of a turbine blade can be said to be an area that is difficult to cool. Because of this, in, for example, Patent document 1 and Patent document 2, a cooling technique is proposed in which film cooling is performed on a trailing edge area of a turbine blade by film cooling gas discharged via notch portions opened in the ventral side (pressure side) of the trailing edge area of the turbine blade, the notch portions making the thickness of the trailing edge portion thinner.
Attention is drawn to the disclosures of EP 1,961,917, which shows the technical features of the preamble of independent claim 1 and JP 2002-221005.

### [Documents of the prior art]

### [Patent documents]

[Patent document 1] Japanese Unexamined Patent Application, First Publication No. 2003-56301
[Patent document 2] United States Patent No. 5215431

### [Disclosure of the Invention]

### [Problems to be Solved by the Invention]

However, in the techniques proposed in Patent document 1 and Patent document 2, it is difficult to adequately cool the area around the trailing edge of a turbine blade, and further improvements in the cooling efficiency in the area around the trailing edge portion of a turbine blade are desired. For example, it is possible to increase the heat transfer rate between the blade portion and the cooling gas by generating turbulence in the flow of the cooling gas discharged from the notch portions. However, if turbulence is generated in the flow of this cooling gas, then this has the disadvantage that the cooling gas gets immediately mixed with the main flow that is flowing over the surface of the blade portions, so that the temperature of the cooling gas that is serving as a refrigerant is raised. Namely, if the turbulence in the cooling gas is promoted more than is necessary, then the mixing of the film cooling layer with the main flow gas is accelerated, and the efficiency of the film cooling is deteriorated.

The present invention was conceived in view of the above-described problems, and it is an object thereof to improve the cooling efficiency in an area around the rear edge of a turbine blade by suppressing any deterioration in the film cooling efficiency in the turbine blade, and by improving the heat transfer rate between the blade portion and the cooling gas.

### [Means for Solving the Problem]

The present invention employs the following structure as a means of solving the above-described problems.

A first aspect of the present invention is a turbine blade that is provided with a plurality of rows of cooling portions that have notch portions which form slots, the cooling portions having through holes and being arranged to discharge cooling gas that has been introduced into an internal portion of a blade portion of the turbine blade onto a ventral side blade surface (a pressure side blade surface), and that are formed in rows that are stacked in a direction between the blade leading edge and the blade trailing edge; among the cooling portions, the cooling portions that are provided in the row located furthest to the downstream side from among the plurality of rows are turbulence promoting cooling portions that have turbulence promoting devices in areas exposed by the notch portions which form the slots; and the cooling portions that are provided in other rows from among the plurality of rows are film cooling portions that form a film cooling layer in the areas exposed by the notch portions which form the slots.

A second aspect of the present invention is the turbine blade according to the first aspect wherein, in the other rows of the plurality of rows, the plurality of the film cooling portions are placed discretely from each other in the height direction of the blade portion.

A third aspect of the present invention is the turbine blade according to the first aspect or the second aspect wherein, in the other rows of the plurality of rows, the film cooling portions are provided continuously in an elongated shape in the height direction of the blade portion.

A fourth aspect of the present invention is the turbine blade according to any of the first through third aspects wherein the turbulence promoting device is formed by a plurality of pin portions that stand upright in the areas exposed by the notch portions.

A fifth aspect of the present invention is the turbine blade according to any of the first through third aspects wherein the turbulence promoting device is formed by a plurality of step portions that stand upright in the areas exposed by the notch portions and that are stacked in rows in the flow direction of the cooling gas.

A sixth aspect of the present invention is the turbine blade according to any of the first through third aspects wherein the turbulence promoting device is formed by a plurality of dimple portions that are formed in the areas exposed by the notch portions.

### [Effects of the Invention]

In the present invention, a plurality of rows of cooling portions having notch portions are provided in rows that are stacked in a direction from the leading edge of a blade to the trailing edge of the blade. The row located furthest to the downstream side from among this plurality of rows of cooling portions forms a turbulence promoting cooling portion that is provided with turbulence promoting devices and cools by means of turbulence. All of the other rows form film cooling portions that form a film cooling layer. As a consequence, according to the present invention, the turbulence of the cooling gas is promoted by the turbulence promoting cooling portions so that a convective heat transfer is promoted in the turbulence promoting cooling portions, and a film cooling layer is formed by the cooling gas flowing out from the film cooling portions. This enables film cooling to be performed. Namely, according to the present invention, in trailing edge areas of the blade portions, a convective heat transfer with the film cooling gas whose temperature is lower than that of the main flow gas is promoted by the turbulence promoting cooling portions. As a result, trailing edge portions of a blade portion can be cooled efficiently. Accordingly, according to the present invention, by providing notch portions that form a film separately from notch portions that have a structure that promotes heat transfer, it is possible to suppress any reduction in the film cooling efficiency, and to improve the heat transfer rate between the blade portions and the cooling gas. As a result, the cooling efficiency of the area around the trailing edge of a blade portion can be improved.

### [Brief description of the drawings]

[FIG. 1] FIG. 1 is a perspective view of a turbine blade according to an embodiment of the present invention.
[FIG. 2A] FIG. 2A is a cross-sectional view of a turbine blade according to an embodiment of the present invention.
[FIG. 2B] FIG. 2B is a cross-sectional view of a turbine blade according to an embodiment of the present invention.
[FIG. 3A] FIG. 3A is a perspective view showing in enlargement principal portions of a turbine blade according to an embodiment of the present invention.
[FIG. 3B] FIG. 3B is a perspective view showing in enlargement principal portions of a turbine blade according to an embodiment of the present invention.
[FIG. 4A] FIG. 4A is an enlarged perspective view showing a variant example of a turbine blade according to an embodiment of the present invention.
[FIG. 4B] FIG. 4B is an enlarged perspective view showing a variant example of a turbine blade according to an embodiment of the present invention.
[FIG. 5] FIG. 5 is a plan view showing a variant example of a turbine blade according to an embodiment of the present invention.

### [Best Embodiments for Implementing the Invention]

Hereinafter, an embodiment of a turbine blade according to the present invention will be described with reference made to the drawings. Note that in the drawings the scale of each component has been suitably altered in order to make each component a recognizable size.

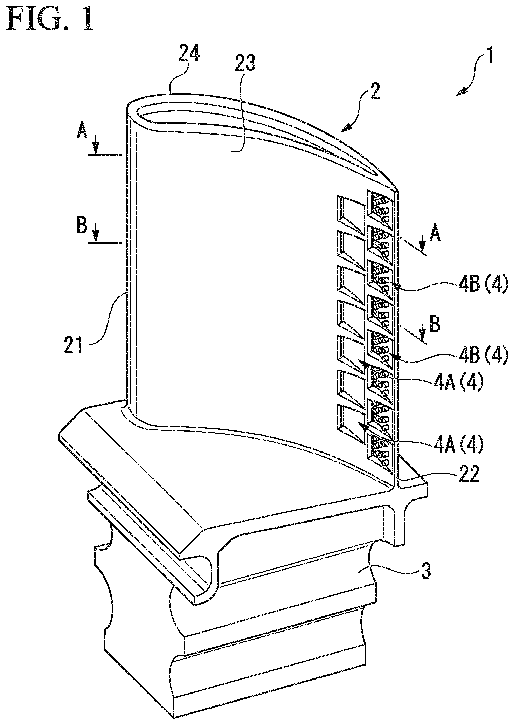

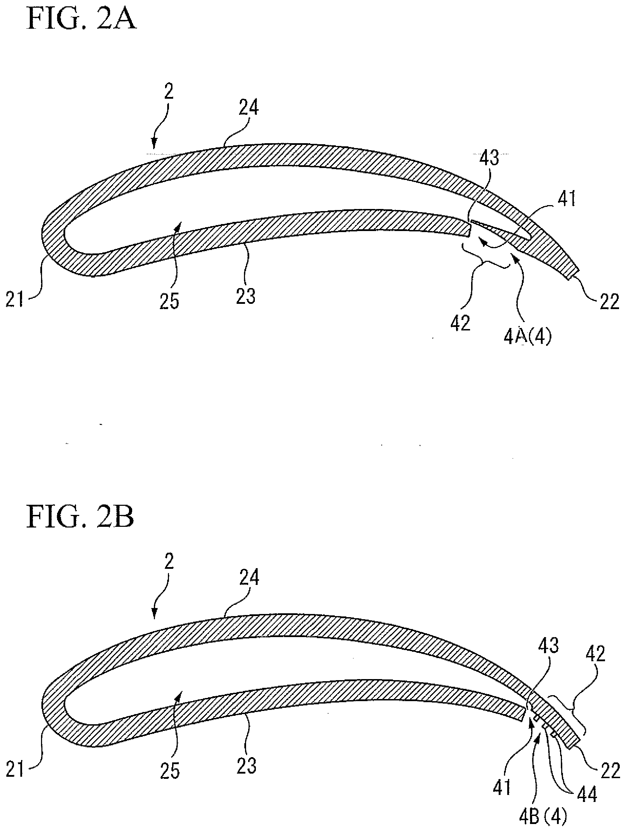

FIG. 1 is a perspective view of a turbine blade 1 of the present embodiment. FIGS. 2A and 2B are cross-sectional views of the turbine blade 1, FIG. 2A is a cross-sectional view taken along a line A-A in FIG. 1, and FIG. 2B is a cross-sectional view taken along a line B-B in FIG. 1. As is shown in FIG. 1, the turbine blade 1 of the present embodiment is provided with a blade portion 2, a root portion 3, and cooling portions 4.

As is shown in FIGS. 2A and 2B, the blade portion 2 is set in a blade shape having a leading edge 21 (i.e., a blade leading edge), a trailing edge 22 (i.e., a blade trailing edge), a ventral side blade surface 23 (i.e., a pressure side blade surface), and a rear side blade surface 24 (i.e. a suction side blade surface). In addition, an internal portion 25 (i.e., a blade interior portion) of the blade portion 2 is provided with a hollow portion into which a cooling gas can be introduced. This blade portion 2 is positioned with the leading edge 21 facing towards the upstream side of the fluid. As a result, the fluid flows from the leading edge 21 towards the trailing edge 22 on the surfaces of the ventral side blade surface 23 and the rear side blade surface 24 of the blade portion 2. Note that in the following description, a flow from the leading edge 21 towards the trailing edge 22 along the surfaces of the ventral side blade surface 23 and the rear side blade surface 24 is referred to as a main flow.

The root portion 3 supports the blade portion 2, and is fixed to a turbine disk. Note that the root portion 3 has an internal flow path (not shown). Cooling gas is supplied to the internal portion 25 of the blade portion 2 through this internal flow path in the root portion 3.

The cooling portions 4 discharge the cooling gas introduced into the internal portion 25 of the blade portion 2 onto the ventral side blade surface 23 side of the trailing edge 22 side, and cool the trailing edge area including the trailing edge 22. These cooling portions 4 have notch portions 41 that are formed on the ventral side blade surface 23 side, and these notch portions 41 form slots 42. Moreover, the cooling portions 4 have through holes 43 that are provided in the wall portion on the leading edge 21 side of the slots 42, and that penetrate into the interior portion 25 of the blade portion 2. These through holes 43 discharge cooling gas into the notch portions 41. In this manner, the cooling portions 4 of the turbine blade 1 of the present embodiment have notch portions 41 that discharge the cooling gas introduced into the internal portion 25 of the blade portion 2 onto the ventral side blade surface 23 side.

Moreover, as is shown in FIG. 1, the turbine blade 1 of the present embodiment is provided with two rows (i.e., a plurality of rows) of the cooling portions 4 that are stacked in a direction from the leading edge 21 towards the trailing edge 22. Each of these rows is formed by a plurality of the cooling portions 4 that are placed discretely from each other in the height direction of the blade portion 2 (i.e., in the top-bottom direction of the sheet of paper on which FIG. 1 is shown) and at equal distances from each other.

Moreover, as is shown in FIG. 1, the cooling portions 4 that form the row on the leading edge 21 side, and the cooling portions 4 that form the row on the trailing edge 22 side are offset from each other in the height direction of the blade portion 2. As a result, the cooling portions 4 are arranged in a zigzag pattern.

In addition, in the turbine blade 1 of the present embodiment, the cooling portions 4 that form the row on the leading edge 21 side make up film cooling portions 4A, while the cooling portions 4 that form the row on the trailing edge 22 side make up turbulence promoting cooling portions 4B.

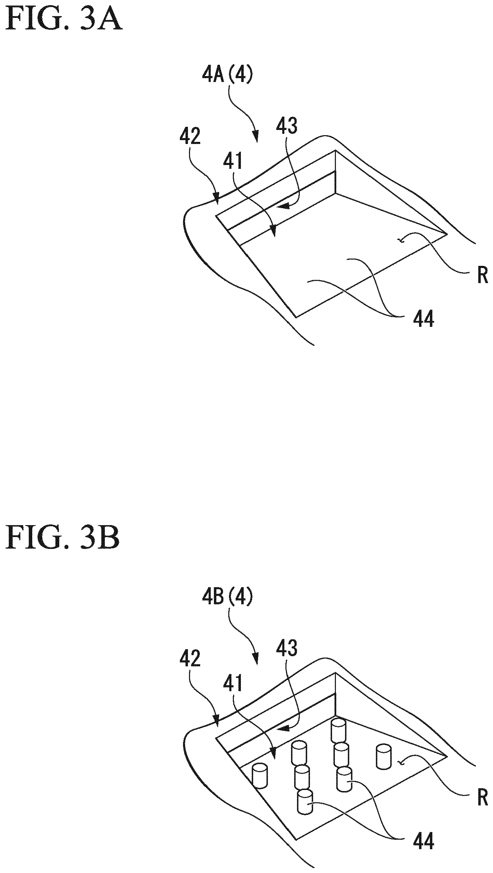

FIG. 3A is an enlarged perspective view of a film cooling portion 4A. As is shown in FIG. 3A, the film forming portion 4A is provided with a flat area R that is exposed by the notch portion 41. This film cooling portion 4A forms a film cooling layer using the cooling gas that is discharged from the through hole 43, and thereby performs film cooling. In other words, the film cooling portion 4A forms a film cooling layer in the area R that is exposed by the notch portion 41, and is thereby able to perform film cooling. Namely, the area around the trailing edge of the blade portion 2 is able to be cooled by this structure.

FIG. 3B is an enlarged perspective view of a film turbulence promoting cooling portion 4B. As is shown in FIG. 3B, the turbulence promoting cooling portion 4B is provided with a plurality of pin portions 44 (i.e., turbulence promoting devices) that stand upright on the flat area R that is exposed by the notch portions 41. This turbulence promoting cooling portion 4B promotes turbulence as a result of the laminar flow expelled from the through hole 43 colliding with the plurality of pin portions 44. Namely, using this turbulence, it is possible to promote a convective heat transfer between the film air and the blade portion. Moreover, as is shown in FIG. 3B, the plurality of pin portions 44 are arranged in a zigzag pattern on the area R. The height of each pin portion 44 is set such that the pin portions 44 do not protrude above the surface of the ventral side blade surface 23 in order to avoid any collision with the aforementioned main flow. Note that, as is shown in FIG. 3B, in the present embodiment all of the pin portions 44 are set at the same height, however, it is not essential for the height of the pin portions 44 to be standardized.

In the turbine blade 1 of the present embodiment that is constructed in the above-described manner, the plurality of rows of cooling portions 4 that have the notch portions 41 are arranged so as to form rows that are stacked from the leading edge 21 towards the trailing edge 22. In addition, the row from among the plurality of rows of cooling portions 4 that is located on the trailing edge 22 side forms the turbulence promoting cooling portions 4B, while the row on the leading edge 21 side forms the film cooling portions 4A. Because of this, according to the turbine blade 1 of the present embodiment, a convective heat transfer is promoted by the turbulence promoting cooling portions 4B, and a film cooling layer is formed by the film cooling portions 4A. Namely, because the convective heat transfer that is generated between the film cooling gas whose temperature is lower than that of the main flow gas and the blade portion is promoted by the turbulence promoting cooling portion, trailing edge portions of a blade portion can be cooled efficiently. Accordingly, according to the present invention, by providing the notch portions that form the film cooling layer separately from the notch portions that have a structure that promotes the transfer of heat, it is possible to suppress any reduction in the film cooling efficiency, and to improve the heat transfer rate between the blade portions and the cooling gas. As a result, the cooling efficiency of the area around the trailing edge of the blade portion can be improved.

Moreover, in the turbine blade 1 of the present embodiment, the cooling portions 4 that form the row furthest to the trailing edge 22 side form the turbulence promoting cooling portions 4B. Normally, the rear side blade surface of the trailing edge side of the blade portion is where the temperature of the blade surface is most easily increased, and it is necessary to increase the cooling in this region. Namely, by providing notch portions in the wall surface of the side of the blade portion having this region that is cooled (i.e., the ventral side), it is possible to achieve a heat transfer in this region at a high heat transfer rate with cooling gas at the lowest possible temperature. Furthermore, as in the turbine blade 1 of the present embodiment, as a result of the cooling portions 4 that form the row furthest to the trailing edge 22 side forming the turbulence promoting cooling portions 4B, the effects of this turbulence on the downstream side of the flow can be reduced. Namely, it is possible to prevent any deterioration in the film cooling efficiency and to improve the heat transfer rate between the blade portion and the cooling gas.

Moreover, in the turbine blade 1 of the present embodiment, a structure is employed in which turbulence is created by the pin portions 44. Because of this, turbulence can be created by means of a simple structure.

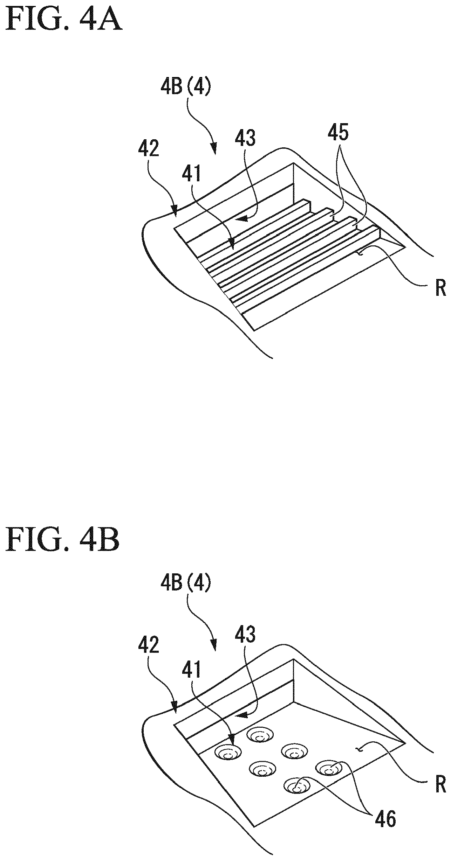

Note that, as is shown, for example, in FIG. 4A, instead of the pin portions 44 it is possible to provide a plurality of step portions 45 (i.e., turbulence promoting devices) that stand upright on the flat area R that is exposed by the notch portions 41, and that are arranged in the flow direction of the cooling gas. When this plurality of step portions 45 are used, the cooling gas discharged from the through holes 43 is able to collide with the step portions 45 so that turbulence is promoted by this structure as well. Namely, turbulence can be promoted by means of a simple structure.

Moreover, as is shown, for example, in FIG. 4B, instead of the pin portions 44 it is possible to provide a plurality of dimple portions 46 (i.e., turbulence promoting devices) that are formed in the area that is exposed by the notch portions 41. When this plurality of dimple portions 46 are used, the cooling gas discharged from the through holes 43 flows into the dimple portions 46 so that turbulence is generated by this structure as well. Namely, turbulence can be promoted by means of a simple structure.

Moreover, in the turbine blade 1 of the present embodiment, the plurality of cooling portions 4 that make up a row are placed discretely from each other in the height direction of the blade portion. As a consequence, it is possible to leave a thick area of the blade portion between cooling portions 4 so that the strength of the turbine blade 1 remains unimpaired.

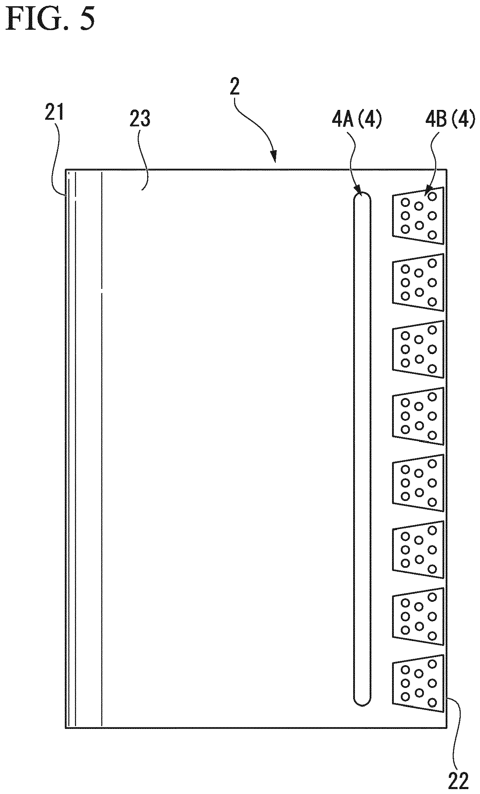

Note that as is shown, for example, in FIG. 5, it is also possible to provide a cooling portion 4 (i.e., the cooling portion 4A in FIG. 5) that is provided continuously in an elongated shape in the height direction of the blade portion. By employing this type of cooling portion 4, it is possible to cool an even broader range in the height direction of the blade portion. However, if the cooling portion 4 is formed in an elongated shape, then the surface area of the apertures of the through holes also increases. Namely, there is a possibility that the flow rate of cooling gas that is discharged from a row that is formed by this cooling portion 4 that is provided continuously in an elongated shape will be greater than the flow rate of cooling gas discharged from a row that is formed by cooling portions 4 that are arranged discretely. Because of this, if the cooling portion 4 is formed in an elongated shape, it is preferable for the surface area of the apertures of the through holes in the cooling portion 4 that is provided continuously in an elongated shape to be narrowed down, so that sufficient cooling gas can be discharged from the cooling portions 4 that are arranged discretely.

While preferred embodiments of the invention have been described and illustrated above, it should be understood that these are exemplary of the invention and are not to be considered as limiting. Combinations or the like of the respective members shown in the aforementioned examples can be variously changed in a scope without departing from the gist of the present invention based on the design request or the like.

For example, the typical view of a turbine blade in FIG. 1 shows a moving blade.
However, the present structure can also be applied to a stationary blade.

Moreover, in the turbine blade 1 of the present embodiment, two rows of cooling portions 4 are provided so as to form rows that are stacked in the flow direction of the main flow. However, the present invention is not limited to this and it is also possible to provide the plurality of rows of cooling portions 4 in three or more rows in the flow direction of the main flow. In this case, of the plurality of rows of cooling portions 4 of the present invention, those cooling portions in the row located furthest to the downstream side form the turbulence promoting cooling portions 4B, while the cooling portions in the other rows form the film cooling portions 4A.

Moreover, in the turbine blade 1 of the present embodiment, the cooling portions 4 are arranged in a zigzag pattern. However, the present invention is not limited to this and it is also possible for the cooling portions 4 to be arranged in a lattice configuration.
Moreover, it is also possible that the through holes 43 are not formed in the turbulence promoting cooling portions 4B.

### [Industrial applicability]

According to the present invention, by providing notch portions that form a film separately from notch portions that have a structure that promotes heat transfer, it is possible to suppress any reduction in the film cooling efficiency, and to improve the heat transfer rate between the blade portions and the cooling gas. As a result, the cooling efficiency of the area around the trailing edge of a turbine blade can be improved.

### [Description of the Reference Numerals]

1 ... Turbine blade
2 ... Blade portion
21 ... Leading edge (Blade leading edge)
22 ... Trailing edge (Blade trailing edge)
23 ... Ventral side blade surface (Pressure side blade surface, Ventral side)
24 ... Rear side blade surface (Suction side blade surface, Rear side)
25 ... Internal portion (Internal portion of the blade portion)
4 ... Cooling portion
4A ... Film cooling portion (Cooling portion)
4B ... Turbulence promoting cooling portion (Cooling portion)
41 ... Notch portion
42 ... Slot
43 ... Through hole
44 ... Pin portion (Turbulence promoting device)
45 ... Step portion (Turbulence promoting device)
46 ... Dimple portion (Turbulence promoting device)

## Claims

1. A turbine blade (1) that is provided with a plurality of rows of cooling portions (4) being arranged to discharge cooling gas that has been introduced into an internal portion (25) of a blade portion (2) of the turbine blade (1) onto a pressure side blade surface (23), and that are formed in rows that are stacked in a direction between the blade leading edge (21) and the blade trailing edge (22),
**characterized in that**:
the plurality of rows of cooling portions (4) have notch portions (41) which form slots (42), and through holes (43);
among the cooling portions (4), the cooling portions that are provided in the row located closest to the downstream side from among the plurality of rows are turbulence promoting cooling portions (4B) that have turbulence promoting devices (44, 45, 46) in areas exposed by the notch portions (41) which form the slots (42); and
the cooling portions that are provided in other rows from among the plurality of rows are film cooling portions (4A) that form a film cooling layer in the areas exposed by the notch portions (41) which form the slots (42).

2. The turbine blade (1) according to claim 1, wherein, in the other rows of the plurality of rows, the plurality of the film cooling portions (4A) are placed discretely from each other in the height direction of the blade portion (2).

3. The turbine blade (1) according to claim 1, wherein, in the other rows of the plurality of rows, the film cooling portions (4A) are provided continuously in an elongated shape in the height direction of the blade portion (2).

4. The turbine blade (1) according to claim 1, wherein the turbulence promoting device is formed by a plurality of pin portions (44) that stand upright in the areas exposed by the notch portions (41).

5. The turbine blade (1) according to claim 1, wherein the turbulence promoting device is formed by a plurality of step portions (45) that stand upright in the areas exposed by the notch portions (41) and that are stacked in rows in the flow direction of the cooling gas.

6. The turbine blade (1) according to claim 1, wherein the turbulence promoting device is formed by a plurality of dimple portions (46) that are formed in the areas exposed by the notch portions (41).

## Patentansprüche

1. Turbinenschaufel (1), welche mit einer Mehrzahl von Reihen von Kühlungsabschnitten (4) versehen ist, welche angeordnet sind, um Kühlungsgas abzugeben, welches in einen inneren Abschnitt (25) eines Schaufelabschnitts (2) der Turbinenschaufel (1) auf eine druckseitige Schaufelfläche (23) eingeführt worden ist, und welche in Reihen gebildet sind, welche in einer Richtung zwischen der Schaufelvorderkante (21) und der Schaufelrückkante (22) gestapelt sind,
**dadurch gekennzeichnet, dass**:
die Mehrzahl von Reihen der Kühlungsabschnitte (4) Einkerbungsabschnitte (41) aufweist, welche Nuten (42) und Durchgangslöcher (43) bilden;
unter den Kühlungsabschnitten (4) die Kühlungsabschnitte, welche in der Reihe bereitgestellt sind, welche am nächsten zur stromabwärtigen Seite der Mehrzahl von Reihen angeordnet ist, turbulenzfördernde Kühlungsabschnitte (4B) sind, welche turbulenzfördernde Vorrichtungen (44, 45, 46) in Bereichen aufweisen, welche von den die Nuten (42) bildenden Einkerbungsabschnitten (41) freigelegt sind; und
die Kühlungsabschnitte, welche in anderen Reihen unter der Mehrzahl von Reihen bereitgestellt sind, Filmkühlungsabschnitte (4A) sind, welche eine Filmkühlungsschicht in den Bereichen bilden, welche durch die die Nuten (42) bildenden Einkerbungsabschnitte (41) freigelegt sind.

2. Turbinenschaufel (1) nach Anspruch 1, wobei, in den anderen Reihen der Mehrzahl von Reihen die Mehrzahl von Filmkühlungsabschnitten (4A) diskret voneinander in der Höhenrichtung des Schaufelabschnitts (2) angeordnet ist.

3. Turbinenschaufel (1) nach Anspruch 1, wobei, in den anderen Reihen der Mehrzahl von Reihen die Filmkühlungsabschnitte (4A) kontinuierlich in einer länglichen Form in der Höhenrichtung des Schaufelabschnitts (2) bereitgestellt sind

4. Turbinenschaufel (1) nach Anspruch 1, wobei die turbulenzfördernde Vorrichtung aus einer Mehrzahl von Zapfenabschnitten (44) gebildet ist, welche aufrecht in den Bereichen stehen, welche durch die Einkerbungsabschnitte (41) freigelegt sind.

5. Turbinenschaufel (1) nach Anspruch 1, wobei die turbulenzfördernde Vorrichtung aus einer Mehrzahl von Stufenabschnitten (45) besteht, welche aufrecht in den Bereichen stehen, welche durch die Einkerbungsabschnitte (41) freigelegt sind und welche in Reihen in der Strömungsrichtung des Kühlungsgas gestapelt sind.

6. Turbinenschaufel (1) nach Anspruch 1, wobei die turbulenzfördernde Vorrichtung aus einer Mehrzahl von Vertiefungsabschnitten (46) gebildet ist, welche in den Bereichen gebildet sind, welche durch die Einkerbungsabschnitte (41) freigelegt sind.

## Revendications

1. Aube de turbine (1) comportant plusieurs rangées de parties de refroidissement (4), configurées pour décharger le gaz de refroidissement ayant été introduit dans une partie interne (25) d'une partie d'aube (2) de l'aube de turbine (1) sur une surface de l'aube (23) du côté sous pression, et formées en rangées qui sont empilées dans une direction entre le bord d'attaque de l'aube (21) et le bord de fuite de l'aube (22) ;
**caractérisée en ce que** :
les plusieurs rangées de parties de refroidissement (4) comportent des parties d'encoche (41) formant des fentes (42) et des trous de passage (43) ;
parmi les parties de refroidissement (4), les parties de refroidissement agencées dans la rangée la plus proche du côté aval, parmi les plusieurs rangées, sont des parties de refroidissement (48) favorisant la turbulence comportant des dispositifs favorisant la turbulence (44, 45, 46) dans des zones exposées par les parties d'encoche (41) qui forment les fentes (42) ; et
les parties de refroidissement agencées dans d'autres rangées, parmi les plusieurs rangées, sont des parties de refroidissement de film (4A) formant une couche de refroidissement de film dans les zones exposées par les parties d'encoche (41) qui forment les fentes (42).

2. Aube de turbine (1) selon la revendication 1, dans laquelle, dans les autres rangées des plusieurs rangées, les plusieurs parties de refroidissement de film (4A) sont placées séparément les unes des autres dans la direction de la hauteur de la partie d'aube (2).

3. Aube de turbine (1) selon la revendication 1, dans laquelle, dans les autres rangées des plusieurs rangées, les parties de refroidissement de film (4A) sont agencées de manière continue dans une forme allongée dans la direction de la hauteur de la partie d'aube (2).

4. Aube de turbine (1) selon la revendication 1, dans laquelle le dispositif favorisant la turbulence est formé par plusieurs parties de goupille (44) agencées verticalement dans les zones exposées par les parties d'encoche (41).

5. Aube de turbine (1) selon la revendication 1 dans laquelle le dispositif favorisant la turbulence est formé par plusieurs parties étagées (45) agencées verticalement dans les zones exposées par les parties d'encoche (41) et empilées dans des rangées dans la direction d'écoulement du gaz de refroidissement.

6. Aube de turbine (1) selon la revendication 1, dans laquelle le dispositif favorisant la turbulence est formé par plusieurs parties de creux (46) formées dans les zones exposées par les parties d'encoche (41).
